# EUROPEAN PATENT SPECIFICATION

(11) **EP 3 064 338 B1**
(45) Date of publication and mention of the grant of the patent: **05.05.2021**
(21) Application number: 16158790.2
(22) Date of filing: 04.03.2016
(51) Int. Cl.: B29C 65/50, B65H 19/18, B29C 65/78, B29L 23/00, B29L 31/00

(54) **DEVICE AND METHOD FOR SPLICING TUBULAR FOIL**
VORRICHTUNG UND VERFAHREN ZUM SPLEISSEN VON SCHLAUCHFOLIE
DISPOSITIF ET PROCÉDÉ D'ÉPISSURAGE DE FILM TUBULAIRE

(30) Priority: 06.03.2015 NL 2014414
(43) Date of publication of application: 07.09.2016
(73) Proprietor: Fuji Seal International, Inc., Osaka-shi, Osaka 532-0003 (JP)
(72) Inventor: Hendriks, Fred, 5764 RS De Rips (NL); Van Heck, Marinus Antonius Leonarda, 5254 LB Haarsteeg (NL)
(74) Representative: Jacobs, Bart

(56) References cited:
- WO-A1-2013/137739

## Description

The present invention relates to a device and method for splicing an end section of a current tubular foil to a begin section of a subsequent tubular foil.

During the manufacturing and packaging of goods, labels may be attached to packages or containers that hold a product. For instance, in the beverages industry, labels may be placed around bottles to indicate the contents thereof, to indicate the brand name, etc. Similar applications can be found in non-food industries, more in particular in the market of cosmetic products. A shampoo container may be provided with a label indicating the specific type of shampoo etc.

One particular type of label is formed by using heat-shrinkable sleeves. Once these sleeves are subjected to high enough temperatures, they begin to shrink thereby attaching themselves to the package or container around which they have been placed.

These types of sleeves are typically provided in the shape of a flattened tubular foil that has been arranged around a reel. In general, a reel may contain up to a few hundred meters of tubular foil. Despite this considerable length, at a given moment during the process an emptied reel must be replaced by a new reel. This replacement should be carried out in such a manner that the remaining part of the process, i.e. the actual placement of sleeves around packages or containers is not disturbed. To this end, most sleeving lines comprise a buffer in which a sufficient amount of tubular foil can be buffered, giving an operator sufficient time to replace the reels.

Because most sleeving lines operate on a continuous basis due to the fact that these lines are connected to other lines that operate on a continuous basis, such as a bottle filling line, an essentially continuous tubular foil must be supplied. Here, a continuous foil must be construed as a connection of several distinct tubular foils, wherein an end section of a current foil is connected to a begin section of a subsequent foil. The process of connecting the different tubular foils is referred to as splicing.

A method comparable of that of the preamble of claim 1 is known from WO 2013/137739 A1.

A method for connecting an end section of a current tubular foil to a begin section of a subsequent tubular foil is known from EP 1 201 585, filed by the same applicant. In this approach, a flattened subsequent tubular foil from a new reel has a begin section and corners thereof are cut away to form a pair of opposing foil parts. This allows the thus formed two foil parts to be opened, separating the parts from each other. The end section of the current tubular foil can be positioned between these foil parts and can then be fixed to the subsequent tubular foil.

A drawback of the abovementioned method is related to the time required for completing the splicing operation. In practice, an operator will perform all actions required for splicing the tubular foils one after the other essentially without interruption.

During this time, the operator cannot attend to other matters. Moreover, for high throughput lines, the time available for splicing the tubular foils is generally very short. The operator has to then perform the necessary steps under a considerable amount of time pressure.

An automated process for splicing an end section of a current tubular foil to a begin section of a subsequent tubular foil, as defined in the preamble of claim 1, is known from WO 2013 137 739 A1, filed by the same applicant and incorporated herein by reference for all purposes. The system disclosed in this patent application comprises a reel unit that is provided with a reel corresponding to the current tubular foil, and a reel corresponding to the subsequent tubular foil. It further comprises a foil guiding unit comprising a driving unit for driving foil from the reel unit upstream to a foil processing system or downstream back to the reel unit, wherein, prior to said splicing, the foil guiding unit is configured for driving the current tubular foil. A controller is used for controlling the driving unit. The system also comprises a foil preparation system having a cutting unit for cutting a begin section of the subsequent tubular foil, thereby dividing the begin section into a pair of opposing foil parts. Splicing is achieved, similar to the manual system described above, by moving the end section of the current tubular foil in between the opposing foil parts, and to then connected the end section of the current tubular foil to the begin section of the subsequent tubular foil.

The abovementioned system is fully automatic, i.e. it requires no or little action on the part of the operator for changing reels. This is not without drawbacks as the system is rather costly and consumes a considerable amount of space, which may not be available in existing lines in which the automated system has to be implemented.

It is an object of this invention to provide an alternative solution which finds a balance between the two known solutions. According to a first aspect, the invention achieves this object by providing a system as specified in the appended claim 1. Said system claim specifies that the reel unit further comprises a pair of oppositely arranged movable holding members and wherein the foil preparation system further comprises a foil folding unit configured for allowing a user to fold the foil parts such that an outer side of the foil parts is attached to a part of an adhesive side of a respective adhesive tape, wherein for each foil part a remaining part of the adhesive side of the adhesive tape that is attached to that foil part is left free, wherein the foil folding unit is configured to allow the foil parts to be folded such that the foil parts remain in their folded form preventing the remaining parts of the adhesive sides to touch or adhere to each other at least when the subsequent tubular foil is held by a user below the begin section in a vertically upright manner, wherein the holding members are configured, in a first position, to hold the folded foil parts separated from each other.

Furthermore, according to the invention, the controller is further configured for controlling the driving unit to move the end section of the current tubular foil in between the folded foil parts held by the holding members in the first position, and for controlling the holding members to move from the first position to a second position thereby pressing, for each foil part, the remaining part of the adhesive side of the adhesive tape attached to that foil part against an outer side of the end section of the current tubular foil thereby forming a spliced tubular foil.

The applicant has realized that if the need for performing the splicing steps one after the other in an essentially uninterrupted manner can be removed, the workflow for the operators can be changed such that time pressure is alleviated. Moreover, by splitting the steps in time, it becomes possible to use an only partially automated system that is less costly and space consuming than the known fully automated system. The present invention allows for the cutting and folding steps to be performed well in advance using the foil cutting unit and the foil folding unit, which may be embodied as separate units that are not connected to each other.

According to the invention, the splitting up of splicing steps is achieved by folding the subsequent tubular foil instead of for instance bending. Due to the fact that folding lines are formed in this tubular foil, it can be prevented that the oppositely arranged and folded foil parts spring back to a position in which they touch each other. Because the foil parts can be folded such that they remain separated, it becomes possible to attach adhesive tape to these foil parts. After the tape has been attached to the foil parts, an operator typically holds the subsequent tubular foil below the begin section in a vertically upright manner, and places the folded foil parts on the movable holding members.

After completing these steps, the subsequent tubular foil is ready for use. However, there is no need to then directly perform the splicing operation. In fact, the actual splicing operation can be performed when needed. The subsequent tubular foil can remain stored in the reel unit, wherein the holding members hold the folded foil parts separated from each other.

The actual splicing operation is made possible due to the fact that the holding members are movable. This allows the current tubular foil to be arranged in between the separated folded foil parts of the subsequent tubular foil, after which the holding members are moved to attach the remaining part of the adhesive side of the adhesive tape to the end section of the current tubular foil.

The present invention does not exclude the possibility that a liner is used to cover the remaining part of the adhesive side of the adhesive tape prior to the application thereof on the current tubular foil. An operator may then remove the liner prior to splicing both tubular foils. A liner may help in maintaining the adhesive properties of the remaining part of the adhesive side of the adhesive tape during storage for longer periods of time.

The folding unit is configured for allowing a user to fold the foil parts such that a folding line is formed in each foil part. Furthermore, the foil folding unit is provided with a pair of oppositely arranged folding supports in between which the begin section of the subsequent tubular foil that has been cut can be arranged, wherein the folding supports each define a respective folding edge and are each provided with a tape accommodating part in or on which the adhesive tape can be arranged, wherein, when the user folds the foil parts of the begin section that has been arranged in between the folding supports over the respective folding edges, the folding lines are formed and the outer sides of the foil parts are attached to the respective adhesive tapes, wherein the adhesive tapes are arranged in or on the respective tape accommodating parts of the folding supports.

An operator may manually operate the foil preparation system, thereby cutting and folding the begin section of the subsequent tubular foil. However, compared to the known method, these steps can be performed well before the actual splicing of the tubular foils. In fact, several different reels in the reel unit can be prepared in this manner. Moreover, the actual splicing of the tubular foils is automated and can be carried out in a relatively short time. Hence, the operator can perform the non-automated tasks at a suitable time without experiencing the time pressure normally associated with the splicing of tubular foils in a high throughput sleeving line.

The controller may further be configured to control the foil guiding unit and/or the reel unit to align the foil guiding unit and the reel corresponding to the subsequent tubular foil after cutting through the current tubular foil and prior to said moving the end section of the current tubular foil in between the folded foil parts. For instance, the operator may perform the cutting and folding operation on the subsequent tubular foil, and arranging the begin section of the subsequent tubular foil on the holding members. When the current tubular foil needs to be replaced, the foil guiding unit may move into alignment with the reel holding the subsequent tubular foil. In this case, it is assumed that the current tubular foil is no longer connected to the reel it originated from, for instance because the current tubular foil has been cut to define an end section. Once in alignment, the end section of the current tubular foil may be moved in between the open folded foil parts of the subsequent tubular foil to finish the splicing operation.

Each folding support may comprise a first support surface, wherein the folding edge is formed at an edge of said first support surface and wherein the tape accommodating part is formed by or in the first support surface. Furthermore, each holding member may comprise a second support surface.

The first and/or second support surface should be such that it allows the folding of the oppositely arranged foil parts or the support thereof in such a manner that the foil parts are kept in an opened position relative to each other.

To this end, each first support surface and/or each second support surface may have a normal vector extending away from the folding support and/or holding member, respectively, and perpendicular to that surface, wherein the normal vectors of the first support surfaces and/or the normal vectors of the second support surfaces point in a direction parallel to or away from each other. As an example, an angle between the normal vectors of the first support surfaces and/or an angle between the normal vectors of the second support surfaces lies in a range from 0 to 150 degrees, and more preferably in a range from 60 to 120 degrees. Additionally or alternatively, the normal vectors of the first support surfaces and/or the normal vectors of the second support surfaces may be symmetrically arranged with respect to a vertical axis.

To allow the holding members to move between the first and second position, each holding member may be pivotally arranged about a pivot axis that is preferably parallel to a horizontal axis. Here, the horizontal axis is typically parallel to the support surface on which the device according to the invention is placed.

The reel unit may comprise a separate pair of the aforementioned holding members for each reel. Alternatively, the pair of holding members is movably mounted to allow the alignment of the pair with each of the reels mounted in the reel unit.

The reel unit and the foil guiding unit may be moveably arranged with respect to each other to allow the foil guiding unit to be separately aligned with the reel corresponding to the current tubular foil and the reel corresponding to the subsequent tubular foil.

The reel unit and the foil preparation system may be moveably arranged with respect to each other to allow the foil preparation system to be separately aligned with the reel corresponding to the current tubular foil and the reel corresponding to the subsequent tubular foil. In case the cutting unit and the foil folding unit are separate units that are not connected to each other, each unit may, independent from the other unit, be moveably arranged with respect to the reel unit.

In an embodiment, the reels are mounted at a fixed position in the reel unit. In this case, the foil guiding unit and the foil preparation system may be moveably mounted in the device to achieve the desired alignment with the appropriate reel in the reel unit. However, the present invention does not exclude that one or more of the foil preparation system, the foil guiding unit, and the reel unit are moveably arranged.

The folding supports may be movable with respect to each other such that a space between them can be varied in size to facilitate the removal of folded foil parts of the begin section without causing the remaining parts of the adhesive sides to adhere to each other. In an embodiment, the folding supports are kept at a relatively small distance during the placement of the begin section of the subsequent tubular foil. After the folding of the foil parts, the folding supports are moved away from each other such that the subsequent tubular foil can be removed form the folding supports without or at least to a very small extent changing the position of the foil parts.

The system may comprise a first sensor for detecting an end of the current tubular foil, and wherein the foil guiding unit comprises a further cutting unit, said controller being further configured for controlling the further cutting unit to cut through the current tubular foil in response to detecting the end of the current tubular foil, thereby forming the end section upstream from the cut. Instead of waiting for the actual end of the current tubular foil, an end section is created by cutting through the current tubular foil while the actual end is in general still in the reel unit. This allows a well defined end section to be created. It should be noted that the further cutting unit can be implemented in other places or units of the system as well and that the first sensor is preferably arranged in the reel unit or in the foil guiding unit.

The current and subsequent tubular foils may each comprise a plurality of substantially identical images printed thereon at a regular interval. In such case, the system may comprise a second sensor for detecting an image printed on the current tubular foil from among the plurality of images, wherein the controller is configured to control the further cutting unit to cut through the current tubular foil at a predefined distance from the last detected image after having detected the end of the first tubular foil. The second sensor is preferably arranged in the foil guiding unit. Furthermore, the cutting unit may be configured to allow the operator to cut the subsequent tubular foil at a predefined distance from an end of the begin section of the subsequent tubular foil, allowing the interval between the last printed image on the current tubular section and the first printed image on the subsequent tubular section to be substantially equal to the regular interval. To this end, the cutting unit may be provided with markings. Hence, after splicing, a continuous tubular foil is achieved wherein each pair of images is printed at the same interval, even between the last image on the current tubular foil and the first image on the subsequent tubular foil.

According to a second aspect, the present invention provides a method for splicing an end section of a current tubular foil to a begin section of a subsequent tubular foil as specified in the appended claim 10, comprising the steps of:
a) cutting a begin section of the subsequent tubular foil, thereby dividing the begin section into a pair of opposing foil parts;
b) arranging the begin section having the pair of opposing foil parts in between a pair of oppositely arranged folding supports, wherein the folding supports each define a respective folding edge and are each provided with a tape accommodating part in or on which a respective adhesive tape is arranged;
c) folding the foil parts of the begin section over the respective folding edges thereby attaching an outer side of the foil parts to a part of an adhesive side of the respective adhesive tape, wherein a remaining part of said adhesive side is left free, said folding being performed such that the foil parts remain in their folded form preventing the remaining parts of the adhesive sides to adhere to each other at least when the subsequent foil is held by a user below the begin section in a vertically upright manner;
d) holding the folded foil parts separated from each other;
e) bringing the end section of the current tubular foil in between the held folded foil parts;
f) pressing, for each foil part, the remaining part of the adhesive side of the adhesive tape attached to that foil part against an outer side of the end section of the current tubular foil to splice the end section of the current tubular foil to the begin section of the subsequent tubular foil thereby forming a spliced tubular foil.

Step c) may comprise folding the foil parts of the begin section over the respective folding edges thereby forming a folding line in each of the foil parts.

Step d) may be performed using a pair of movable holding members that are arranged in a first position. Moreover, step f) is performed by moving the holding members to a second position. Step e) may be performed by reverting a driving direction of the current tubular foil.

The moving of the holding members to a second position may comprise pivoting about a pivot axis that is preferably parallel to a horizontal axis.

Each folding support may comprise a first support surface, wherein the folding edge is formed at an edge of the first support surface and wherein the tape accommodating part is formed by or in the first support surface, and wherein each holding member comprises a second support surface, and wherein each first support surface and/or each second support surface has a normal vector extending away from the folding support and/or holding member, respectively, and perpendicular to that surface, wherein the normal vectors of the first support surfaces and/or the normal vectors of the second support surfaces point in a direction parallel to or away from each other.

Additionally, an angle between the normal vectors of the first support surfaces and/or an angle between the normal vectors of the second support surfaces may lie in a range from 0 to 150 degrees, and more preferably in a range from 60 to 120 degrees.

Moreover, the normal vectors of the first support surfaces and/or the normal vectors of the second support surfaces may be symmetrically arranged with respect to a vertical axis.

The method may further comprise the steps of detecting an end of the current tubular foil, and cutting through the current tubular foil in response to detecting the end of the first tubular foil, thereby forming the end section upstream from the cut. The current and subsequent tubular foils may each comprise a plurality of substantially identical images printed thereon at a regular interval. In this case, the method may further comprise detecting an image printed on the current tubular foil from among said plurality of images, and cutting through the current tubular foil at a predefined distance from the last detected image after having detected the end of the first tubular foil. Additionally, the method may comprise cutting the subsequent tubular foil at a predefined distance from an end of the begin section of the subsequent tubular foil, allowing the interval between the last printed image on the current tubular section and the first printed image on the subsequent tubular section to be substantially equal to said regular interval.

The method may further comprise providing a reel holding the current tubular foil and a reel holding the subsequent foil. Additionally, the method may comprise aligning the foil guiding unit to the reel that corresponds to the subsequent tubular foil after cutting through the current tubular foil and prior to said bringing the end section of the current tubular foil in between the folded foil parts of the subsequent tubular foil.

Next, the invention will be described in more detail, wherein identical reference numbers are used to designate identical or similar components, and wherein:
Figure 1 schematically illustrates an embodiment of a system in accordance with the present invention;
Figures 2A and 2B illustrate a perspective view and front view of a further embodiment of a system in accordance with the present invention, respectively;
Figure 3 illustrates a cross section of the reel unit in figure 2;
Figures 4A-4B illustrate an example of cutting the subsequent foil using the foil preparation unit of the embodiment in figure 2
Figures 5A-5C illustrate an example of folding the opposing foil parts using the foil preparation unit of the embodiment in figure 2;
Figure 6 illustrates the arrangement of the subsequent foil in the reel unit in the embodiment of figure 2;
Figure 7 illustrates the end section detection and cutting of the current foil in the embodiment of figure 2;
Figure 8 depicts the alignment of the foil guiding unit and the reel for the subsequent foil in the embodiment of figure 2;
Figure 9 shows bringing the current foil in between the foil parts of the subsequent foil in the embodiment of figure 2;
Figure 10 depicts the actual splicing operation in the embodiment of figure 2;
Figure 11 shows how the movable holding members are moved back in the embodiment of figure 2; and

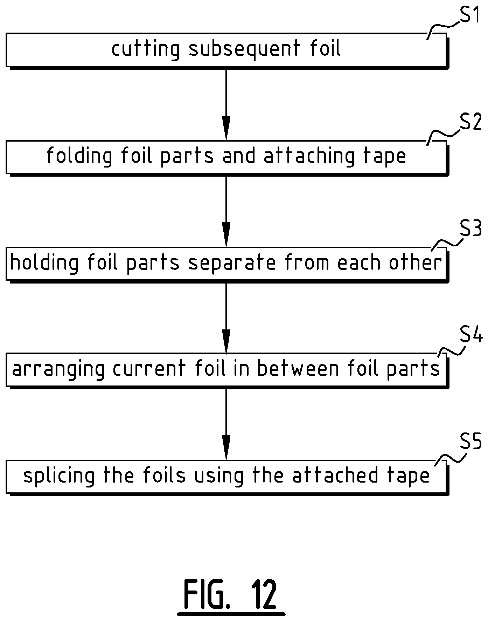

Figure 12 illustrates an exemplary method according to the present invention.

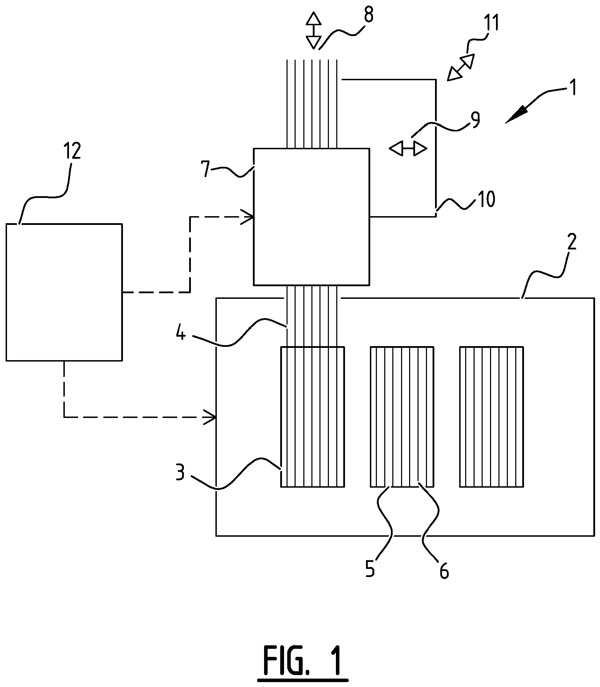

Figure 1 schematically illustrates an embodiment of a system 1 in accordance with the present invention. It comprises a reel unit 2 in which a reel 3 is mounted that corresponds to a current tubular foil 4, and a reel 5 that corresponds to a subsequent tubular foil 6. A foil guiding unit 7 is used for driving foil from reel unit 2 upstream to a foil processing system (not shown) or downstream back to reel unit 2 as indicated by arrow 8. System 1 further comprises a foil preparation system 10 that comprises a cutting unit and a folding unit. For convenience, both units are assumed to be connected such that both units can move as a whole. However, it is equally possible that these units are separately movable.

Foil guiding unit 7 and foil preparation system 10 can be moved in the direction indicated by arrow 9 to allow these units to align with a desired reel in real unit 2. In addition, one or both units 7, 10 can be displaced in the direction indicated by arrow 11. This allows units 7, 10 to pass each other in the direction given by arrow 9 without colliding. Such movement is for instance required when foil guiding unit 7 is handling current tubular foil 4 and when foil preparation system 10 is moved to align with reel 5 holding subsequent foil 6 to allow the latter foil to be prepared.

System 1 further comprises a controller 12 for controlling the foil guiding unit 7 and reel unit 2 as will be elucidated later.

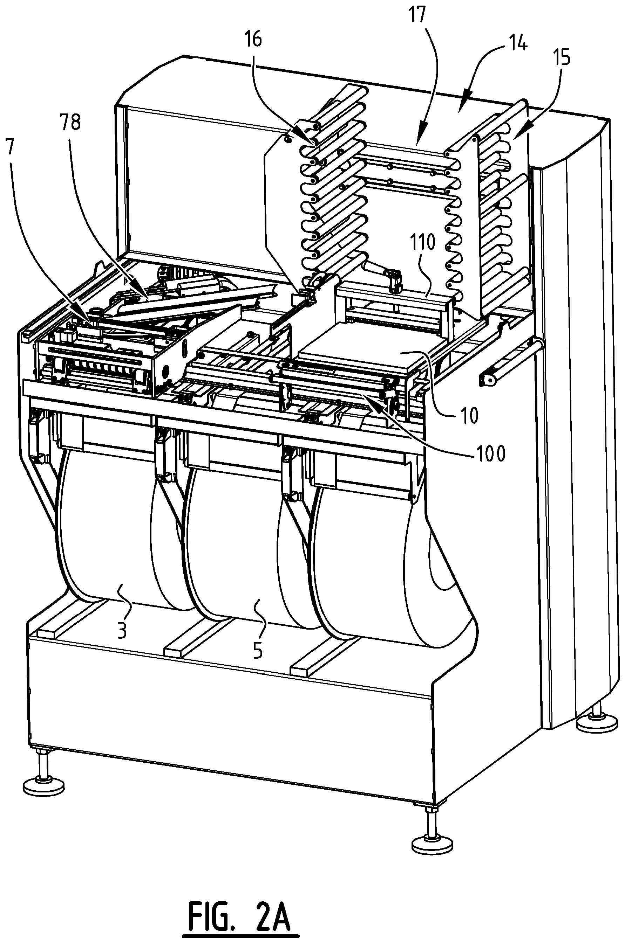

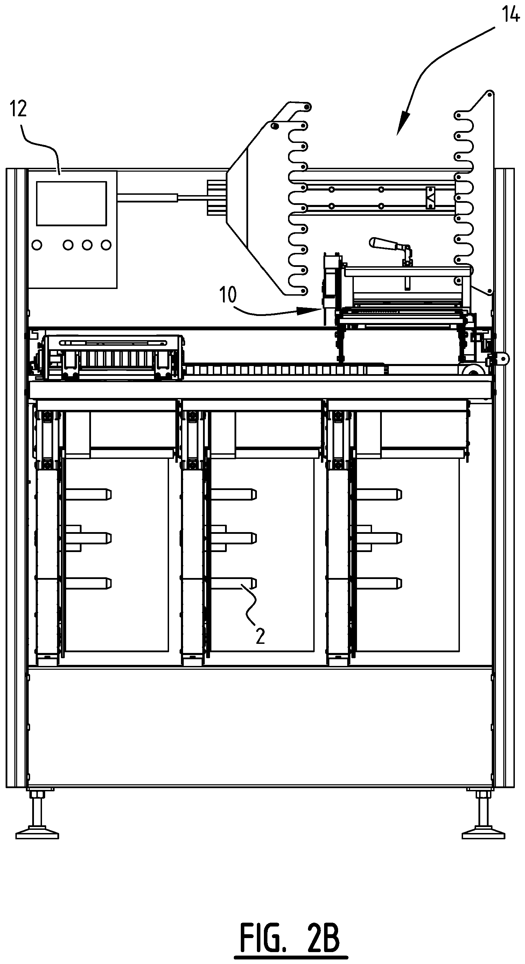

Figure 2A illustrates a perspective view of a further embodiment of a system in accordance with the present invention. It resembles the embodiment depicted in figure 1. However, in this embodiment, foil preparation system 10 is able to translate along the width direction of the system, allowing foil preparation system 10 to align itself to any of the reels 3, 5 in the reel unit. Furthermore, in this embodiment, foil guiding unit 7 is arranged at a lower level than foil preparation system 10 so that they can pass each other in the width direction of the system, see figure 2B. A cover plate is normally used in between cover foil guiding unit 7 and foil preparation system 10. For clarity, this cover plate is not shown in figure 2A.

Foil guiding unit 7 is also able to translate along the width direction of the system to allow foil guiding unit 7 to align with any of the reels 3, 5 in the reel unit. It further comprises a foil redirection member 78 that re-directs foil from the reel unit towards a buffer unit 14. This latter unit comprises a first buffer member 15 and a second buffer member 16 between which the foil runs. These members can move towards or away from each other in a slot 17 thereby changing the amount of buffered foil. Buffer unit 14 is connected to a foil processing system (not shown), such as a sleeving line, and is able to buffer a given amount of foil to ensure a continuous supply of foil to the foil processing system even during the splicing of the current and subsequent tubular foils.

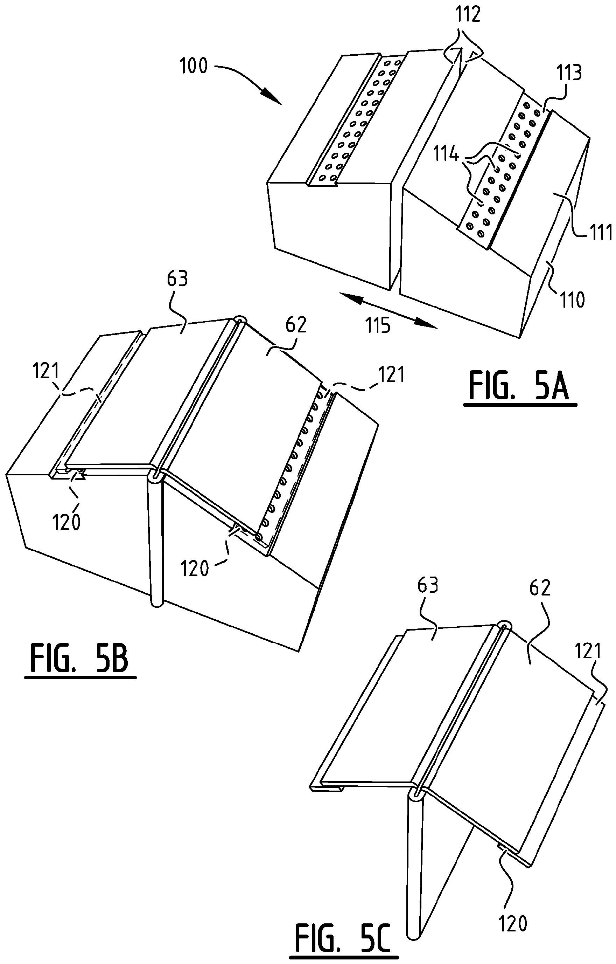

Foil preparation unit 10 comprises a foil cutting unit 130 and a foil folding unit 100, the latter being displayed in more detail in figures 5A-5C. Here, foil cutting unit 130 and foil folding unit 100 are connected thereby forming a single unit. In other embodiments, the foil cutting unit 130 and the foil folding unit 100 may be disjoined units, both part of a foil preparation system.

Figure 2 illustrates a cross section of reel unit 2 in more detail during the initial phase of the splicing process, in which reel 3 still holds a small part of current tubular foil 4.

As shown, reel unit 2 comprises a rotatable shaft 21 onto which reel 3 is placed. It further comprises three guiding rollers 22. For each real, a separate pair of holding members 23 is arranged, which, in figure 2, are not used. Reel unit also comprises a foil clamp 24 for clamping foil if required. This allows a foil to remain held by holding members 23 even if a pulling force is exerted by the reel. Also foil clamp 24 is not used in figure 2.

Foil guiding unit 7 comprises a pair of driving rollers 71 for driving foil 4. It should be noted that one or more of rollers 22 and shaft 21 may be configured a driving roller in addition to or in place of driving rollers 71.

To detect the end of current foil 4, system 1 is provided with a detector 72, such as an optical detector, which is arranged in foil guiding unit 7. It should be apparent to the skilled person that detector 72 could be equally placed in reel unit 2 for each reel separately.

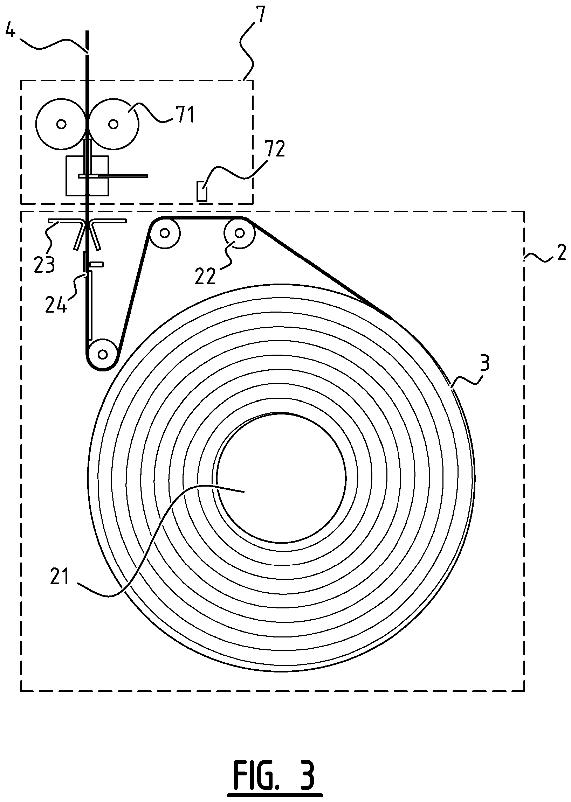

While current foil 4 is being fed to a foil processing system (not shown), such as a sleeving station, an operator may prepare subsequent foil 6 on reel 5 for the splicing operation. To that end, subsequent foil 6 is first cut using cutting unit 130, as illustrated in figures 3A and 3B, which is part of the foil preparation system.

The cutting unit comprises a supporting surface 131 with a marking 132, which relates to the positioning of images 61 printed on subsequent foil 6. Here, it is noted that both current foil 4 and subsequent foil 6 comprise the same images, which have been printed on the foils with a predefined mutual distance. Cutting subsequent foil 6 using marking 132 ensures that foil 6 is cut in such a manner that a first distance between the first image on subsequent foil 6 and an edge of the begin section of subsequent foil 6 is known.

Cutting unit 130 allows subsequent foil 6 to be cut at sides thereof, thereby forming two oppositely arranged foil parts. More in particular, a knife 133 is moved towards supporting surface 131 thereby cutting through foil 6 from a direction perpendicular to supporting surface 131. As a result, two opposing foil parts 62, 63 are formed as illustrated in figure 3B. Due to the formed cut line, the opposing foil parts 62, 63 can be moved with respect to each other, thereby opening flattened foil 6. Foil parts 62, 63 are part of the begin section of foil 6.

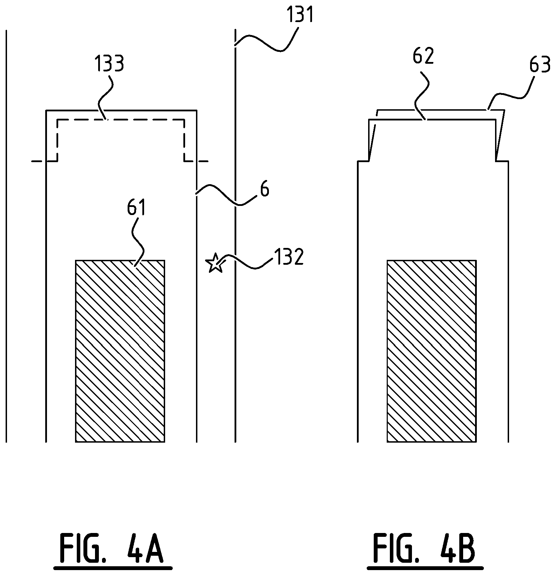

After cutting, the thus formed begin section is arranged in between two folding supports 110 of foil folding unit 100 shown in figure 4A. Each folding support 110 comprises a first support surface 111, and a folding edge 112 is formed at an edge thereof. In addition, a tape accommodating part 113 is formed in first support surface 111. Inside tape accommodating part 113, vacuum openings 114 are arranged through which a suction force can be applied. This allows an adhesive tape 120 to be placed and kept in tape accommodating part 113.

Figure 4B illustrates how foil guiding unit 100 can be used to fold foil parts 62, 63 over respective folding edges 112. In addition, the edges of foil parts are attached to the adhesive side of a single-sided adhesive tape 120.

Here, during the folding of foil parts 62, 63, adhesive tape 120 is kept in place using the suction force, generated using a vacuum pump, exerted on adhesive tape 120. A part 121 of the adhesive side of adhesive tape 120 is not covered by foil parts. In fact, this remaining part will later on be attached to current foil 4.

After folding, the suction force is stopped and the folding supports are moved away from each other in the direction indicated by arrow 115. This creates an opening for removing subsequent foil as indicated in figure 4C from the folding unit without causing foil parts 62, 63 to be folded back. The begin section is then placed on holding members 23 associated with reel 5 for subsequent foil 6, as shown in figure 5. Additionally, subsequent foil 6 may be clamped using foil clamp 24. Because foil parts 62, 63 are folded, it is possible to hold these parts in place without using a vacuum.

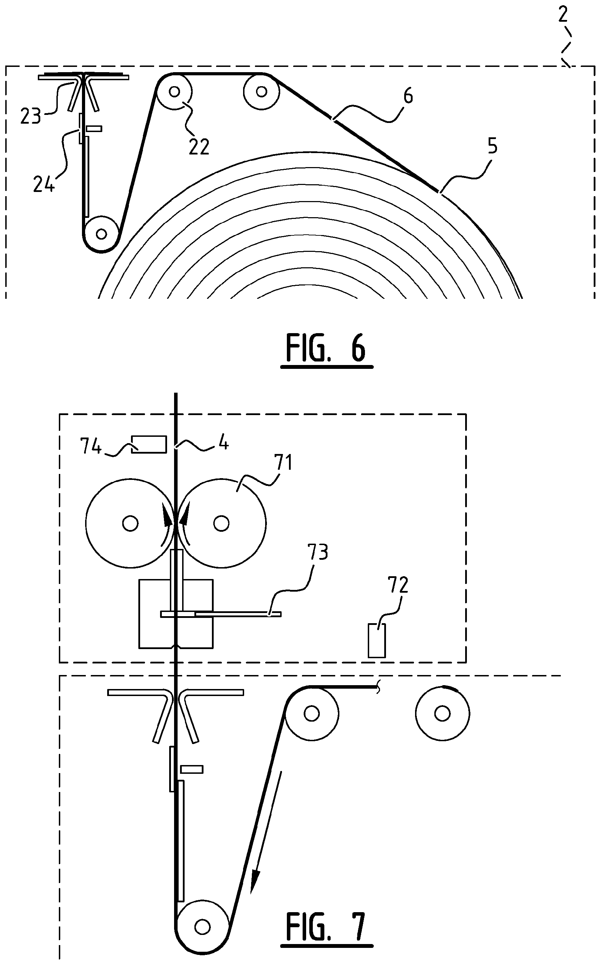

At a given moment in time, detector 72 detects the end of current foil 4, see figure 6. This information is fed back to controller 12. After detecting the end, controller 12 will, using the information from image detector 74, determine a suitable moment for cutting through current foil 4 using cutting unit 73. Here, image detector 74 detects the images printed on current foil 4.

The suitable moment is chosen such that a current foil 4 is cut at a second distance from the last image on current foil 4. When the suitable moment arrives, controller 12 will control cutting unit 73 to cut through current foil 4. In general, a small piece of current foil 4 will thereafter remain in reel unit.

After cutting through current foil 4, foil guiding unit 7 is moved into alignment with the reel for subsequent foil 6 as indicated in figure 7. During and shortly after the cutting process, the buffer unit in the sleeving line will be activated causing the supply of current foil 4 to the buffer unit to be stopped. Instead, current foil that was previously buffered in buffer unit is provided to the remaining part of the sleeving line allowing the process to continue essentially without interruption.

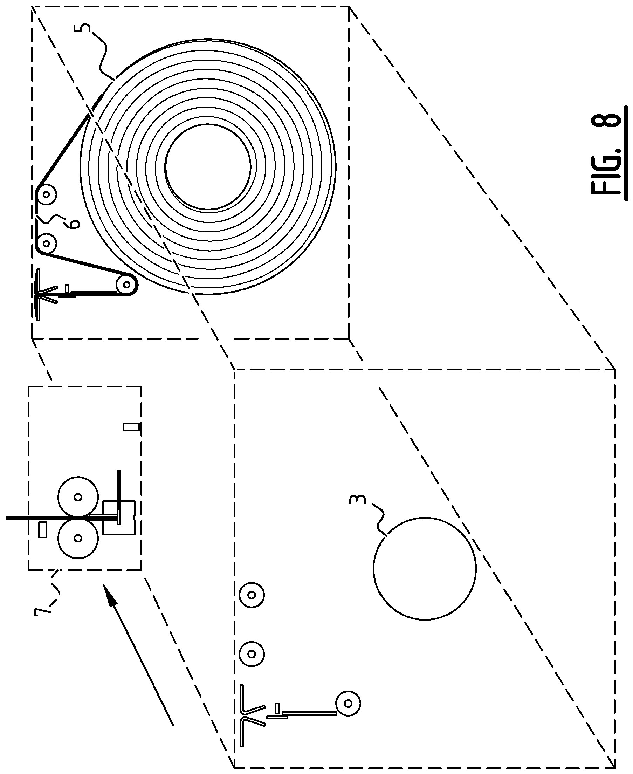

When foil guiding unit 7 has been brought into alignment with the reel for the subsequent foil, current foil 4 still inside foil guiding unit 7 is driven back towards reel unit, as illustrated in figure 8. To this end, controller 12 controls driving rollers 71 to rotate in a direction opposite to the direction that is normally used when foil is supplied from the reel to the foil processing system.

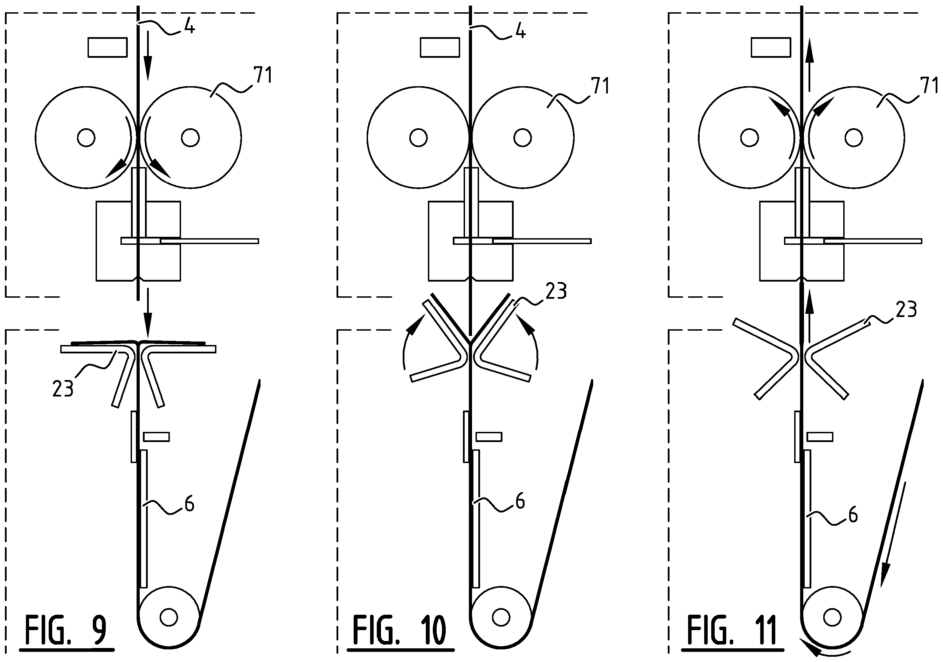

More in particular, current foil 4 is brought in between foil parts 62, 63 that are held by moving members 23. Thereafter, controller 12 will control moving members 23 to pivot about a horizontal axis from a first position to a second position to thereby bring remaining part 121 of the adhesive side of adhesive tape 120 into a contact with the end section of current foil 4, see figure 9. As a result, current foil 4 and subsequent foil 6 will be spliced.

As a final step, controller 12 will move the holding members 23 back to the first position, see figure 10. The clamping can be stopped.

Controller 12 will then control drive rollers 71 to drive the spliced foil towards the foil processing system. In addition, the buffer unit can be controlled to regain the previous buffer level.

Due to the splicing process, the distance between the last image on the current foil and the first image on the subsequent foil equals the sum of the first distance and the second distance. As stated before, these distances can be set. It is therefore possible to choose this distance to be equal to the intermediate distance between the images on the current and subsequent foil.

During the application of the spliced foil it generally occurs that a given product or package is supplied with a sleeve that comprises the boundary between the current and subsequent foil. This visual appearance of such product is generally not acceptable. By incorporating a tag or indicator into the adhesive tape, and by arranging a suitable detector, a product that is provided with such sleeve can be detected, either upstream or downstream of the sleeving station, and can subsequently be removed.

Figure 11 illustrates an exemplary method in accordance with the present invention for splicing an end section of a current tubular foil to a begin section of a subsequent tubular foil.

In a first step S1, a begin section of the subsequent tubular foil is cut, thereby dividing the begin section into a pair of opposing foil parts. Next, in step S2, the begin section having the pair of opposing foil parts is arranged in between a pair of oppositely arranged folding supports and the foil parts are folded over respective folding edges thereby forming a folding line in each of the foil parts. In addition, an outer side of the foil parts is attached to a part of an adhesive side of the respective adhesive tape, wherein a remaining part of the adhesive side is left free.

In step S3, the folded foil parts are held separated from each other, for instance by placing them on holding members. Then, in step S4, the end section of the current tubular foil is arranged in between the held folded foil parts. Finally, in step S5, for each foil part, the remaining part of the adhesive side of the adhesive tape attached to that foil part is pressed against an outer side of the end section of the current tubular foil to splice the end section of the current tubular foil to the begin section of the subsequent tubular foil thereby forming a spliced tubular foil.

Although the present invention has been described referring to embodiments thereof, it should be apparent to the skilled person that various modifications are possible without departing from the scope of the present invention which is defined by the appended claims.

## Claims

1. A system (1) for splicing an end section of a current tubular foil (4) to a begin section of a subsequent tubular foil (6), comprising:
a reel unit (2) comprising a reel (3) corresponding to the current tubular foil, a reel corresponding to the subsequent tubular foil;
a foil guiding unit (7) comprising a driving unit for driving foil from the reel unit (2) upstream to a foil processing system or downstream back to the reel unit (2), wherein, prior to said splicing, the foil guiding unit (7) is configured for driving the current tubular foil (4);
a controller (12) for controlling the driving unit;
a foil preparation system (10) comprising a cutting unit (130) for cutting a begin section of the subsequent tubular foil (6), thereby dividing the begin section into a pair of opposing foil parts (62, 63);
wherein the reel unit (2) further comprises a pair of oppositely arranged movable holding members (23) and wherein the foil preparation system (10) further comprises a foil folding unit (100) configured for allowing a user to fold the foil parts (62, 63) such that an outer side of the foil parts is attached to a part of an adhesive side of a respective adhesive tape (120), wherein for each foil part (62, 63) a remaining part of the adhesive side of the adhesive tape (120) that is attached to that foil part (62, 63) is left free, wherein the foil folding unit (100) is configured to allow the foil parts (62, 63) to be folded such that the foil parts (62, 63) remain in their folded form preventing the remaining parts of the adhesive sides to touch or adhere to each other at least when the subsequent tubular foil (6) is held by a user below the begin section in a vertically upright manner, wherein the holding members (23) are configured, in a first position, to hold the folded foil parts separated from each other;
wherein the controller (12) is further configured for controlling the driving unit to move the end section of the current tubular foil (4) in between the folded foil parts held by the holding members (23) in the first position, and for controlling the holding members (23) to move from the first position to a second position thereby pressing, for each foil part (62, 63), the remaining part of the adhesive side of the adhesive tape (120) attached to that foil part (62, 63) against an outer side of the end section of the current tubular foil (4) thereby forming a spliced tubular foil;
**characterized in that** the folding unit (100) is configured for allowing a user to fold the foil parts (62, 63) such that a folding line is formed in each foil part (62, 63);
wherein the foil folding unit (100) is provided with a pair of oppositely arranged folding supports (110) in between which the begin section of the subsequent tubular foil (6) that has been cut can be arranged, wherein the folding supports (110) each define a respective folding edge (112) and are each provided with a tape accommodating part in or on which the adhesive tape (120) can be arranged, wherein, when the user folds the foil parts (62, 63) of the begin section that has been arranged in between the folding supports (110) over the respective folding edges (112), said folding lines are formed and said outer sides of the foil parts (62, 63) are attached to the respective adhesive tapes (120), wherein the adhesive tapes (120) are arranged in or on the respective tape accommodating parts of the folding supports (110).

2. The system (1) according to any of the previous claims, wherein the controller (12) is further configured to control the foil guiding unit (7) and/or the reel unit (2) to align the foil guiding unit (7) and the reel corresponding to the subsequent tubular foil (6) after cutting through the current tubular foil (4) and prior to said moving the end section of the current tubular foil (4) in between the folded foil parts.

3. The system (1) according to any of the previous claims, wherein each folding support (110) comprises a first support surface (111), wherein the folding edge (112) is formed at an edge of said first support surface (111) and wherein the tape accommodating part (113) is formed by or in the first support surface (111) and/or wherein each holding member (23) comprises a second support surface;
wherein each first support surface (111) and/or each second support surface preferably has a normal vector extending away from the folding support (110) and/or holding member (23), respectively, and perpendicular to that surface, wherein the normal vectors of the first support surfaces (111) and/or the normal vectors of the second support surfaces point in a direction parallel to or away from each other, wherein an angle between the normal vectors of the first support surfaces (111) and/or an angle between the normal vectors of the second support surfaces preferably lies in a range from 0 to 150 degrees, and more preferably in a range from 60 to 120 degrees, wherein the normal vectors of the first support surfaces (111) and/or the normal vectors of the second support surfaces are preferably symmetrically arranged with respect to a vertical axis.

4. The system (1) according to any of the previous claims, wherein each holding member (23) is pivotally arranged about a pivot axis that is preferably parallel to a horizontal axis and/or wherein the reel unit (2) comprises a separate pair of said holding members (23) for each reel.

5. The system (1) according to any of the claims 1-3, wherein the pair of holding members (23) is movably mounted to allow the alignment of said pair with each of the reels mounted in the reel unit (2).

6. The system (1) according to any of the previous claims, wherein the reel unit (2) and the foil guiding unit (7) are moveably arranged with respect to each other to allow the foil guiding unit (7) to be separately aligned with the reel corresponding to the current tubular foil (4) and the reel corresponding to the subsequent tubular foil (6).

7. The system (1) according to any of the previous claims, wherein the reel unit (2) and the foil preparation system (10) are moveably arranged with respect to each other to allow the foil preparation system (10) to be separately aligned with the reel corresponding to the current tubular foil (4) and the reel corresponding to the subsequent tubular foil (6).

8. The system (1) according to any of the previous claims, wherein the folding supports (23) are movable with respect to each other such that a space between them can be varied in size to facilitate the removal of folded foil parts of the begin section without causing the remaining parts of the adhesive sides to adhere to each other.

9. The system (1) according to any of the previous claims, wherein the system comprises a first sensor for detecting an end of the current tubular foil (4), and wherein the foil guiding unit (7) comprises a further cutting unit, said controller (12) being further configured for controlling the further cutting unit to cut through the current tubular foil (4) in response to detecting the end of the current tubular foil (4), thereby forming the end section upstream from the cut, wherein the current (4) and subsequent (6) tubular foils each preferably comprise a plurality of substantially identical images printed thereon at a regular interval, wherein the system (1) comprises a second sensor for detecting an image printed on the current tubular foil (4) from among said plurality of images, wherein the controller (12) is configured to control the further cutting unit to cut through the current tubular foil (4) at a predefined distance from the last detected image after having detected the end of the first tubular foil, wherein the cutting unit is preferably configured to allow the operator to cut the subsequent tubular foil (6)at a predefined distance from an end of the begin section of the subsequent tubular foil (6), allowing the interval between the last printed image on the current tubular section and the first printed image on the subsequent tubular section to be substantially equal to said regular interval.

10. A method for splicing an end section of a current tubular foil (4) to a begin section of a subsequent tubular foil (6), comprising:
a) cutting a begin section of the subsequent tubular foil (6), thereby dividing the begin section into a pair of opposing foil parts (62, 63);
b) arranging the begin section having the pair of opposing foil parts (62, 63) in between a pair of oppositely arranged folding supports (110), wherein the folding supports (110) each define a respective folding edge (112) and are each provided with a tape accommodating part in or on which a respective adhesive tape (120) is arranged;
c) folding the foil parts of the begin section over the respective folding edges thereby attaching an outer side of the foil parts (62, 63) to a part of an adhesive side of the respective adhesive tape (120), wherein a remaining part of said adhesive side is left free, said folding being performed such that the foil parts (62, 63) remain in their folded form preventing the remaining parts of the adhesive sides to adhere to each other at least when the subsequent foil (6) is held by a user below the begin section in a vertically upright manner;
d) holding the folded foil parts separated from each other;
e) bringing the end section of the current tubular foil (4) in between the held folded foil parts (62, 63);
f) pressing, for each foil part (62, 63), the remaining part of the adhesive side of the adhesive tape (120) attached to that foil part against an outer side of the end section of the current tubular foil (4) to splice the end section of the current tubular foil to the begin section of the subsequent tubular foil (6) thereby forming a spliced tubular foil.

11. The method according to claim 10, wherein step c) comprises folding the foil parts (62, 63) of the begin section over the respective folding edges (112) thereby forming a folding line in each of the foil parts (62, 63), wherein step d) is preferably performed using a pair of movable holding members (23) that are arranged in a first position, wherein step f) is preferably performed by moving the holding members (23) to a second position; and/or
wherein step e) is performed by reverting a driving direction of the current tubular foil (4);
wherein said moving the holding members (23) to a second position preferably comprises pivoting about a pivot axis that is preferably parallel to a horizontal axis.

12. The method according to any of the claims 10-11, wherein each folding support (110) comprises a first support surface (111), wherein the folding edge (112) is formed at an edge of said first support surface (111) and wherein the tape accommodating part is formed by or in the first support surface (111), and wherein each holding member (23) comprises a second support surface;
wherein each first support surface (111) and/or each second support surface has a normal vector extending away from the folding support (110) and/or holding member (23), respectively, and perpendicular to that surface, wherein the normal vectors of the first support surfaces (111) and/or the normal vectors of the second support surfaces point in a direction parallel to or away from each other;
wherein an angle between the normal vectors of the first support surfaces (111) and/or an angle between the normal vectors of the second support surfaces preferably lies in a range from 0 to 150 degrees, and more preferably in a range from 60 to 120 degrees, wherein the normal vectors of the first support surfaces (111) and/or the normal vectors of the second support surfaces are preferably symmetrically arranged with respect to a vertical axis.

13. The method according to any of the claims 10-12, further comprising:
detecting an end of the current tubular foil (4);
cutting through the current tubular foil (4) in response to detecting the end of the first tubular foil, thereby forming the end section upstream from the cut;
wherein the current (4) and subsequent (6) tubular foils each preferably comprise a plurality of substantially identical images printed thereon at a regular interval, the method further comprising:
detecting an image printed on the current tubular foil (4) from among said plurality of images;
cutting through the current tubular foil (4) at a predefined distance from the last detected image after having detected the end of the first tubular foil;
the method preferably further comprising:
cutting the subsequent tubular foil (6) at a predefined distance from an end of the begin section of the subsequent tubular foil (6), allowing the interval between the last printed image on the current tubular section and the first printed image on the subsequent tubular section (6) to be substantially equal to said regular interval.

14. The method according to any of the claims 10-13, further comprising:
providing a reel holding the current tubular foil (4) and a reel holding the subsequent foil (6);
preferably aligning the foil guiding unit (7) to the reel that corresponds to the subsequent tubular foil (7) after cutting through the current tubular foil (4) and prior to said bringing the end section of the current tubular foil (4) in between the folded foil parts of the subsequent tubular foil (6).

## Patentansprüche

1. System (1) zum Spleißen eines Endabschnitts einer aktuellen Schlauchfolie (4), um einen Abschnitt einer nachfolgenden Schlauchfolie (6) zu beginnen, aufweisend:
eine Rolleneinheit (2), die aufweist eine Rolle (3), die der aktuellen Schlauchfolie entspricht, eine Rolle, die der nachfolgenden Schlauchfolie entspricht;
eine Folienführungseinheit (7), die eine Antriebseinheit zum Antreiben der Folie aus der Rolleneinheit (2) vorgelagert zu einem Folienverarbeitungssystem oder nachgelagert zurück zur Rolleneinheit (2) aufweist, wobei vor dem Verspleißen die Folienführungseinheit (7) ausgestaltet ist, die aktuelle Schlauchfolie (4) anzutreiben;
eine Steuereinheit (12) zum Steuern der Antriebseinheit;
ein Folienverarbeitungssystem (10), das eine Schneideeinheit (130) zum Schneiden eines Anfangsabschnitts der nachfolgenden Schlauchfolie (6) aufweist, wodurch der Anfangsabschnitt in ein Paar von gegenüberliegenden Folienteilen (62, 63) unterteilt wird;
wobei die Rolleneinheit (2) weiterhin ein Paar von gegenüberliegend angeordneten beweglichen Halteelementen (23) aufweist und wobei das Folienverarbeitungssystem (10) weiterhin eine Folienfalteinheit (100) aufweist, die ausgestaltet ist, um einem Benutzer das Falten der Folienteile (62, 63) so zu ermöglichen, dass eine Außenseite der Folienteile an einem Teil einer Klebeseite eines jeweiligen Klebebands (120) angebracht ist, wobei für jedes Folienteil (62, 63) ein Restteil der Klebeseite des Klebebands (120), das am Folienteil (62, 63) angebracht ist, freigelassen wird, wobei die Folienfalteinheit (100) ausgestaltet ist, um zu ermöglichen, dass die Folienteile (62, 63) so gefaltet werden, dass die Folienteile (62, 63) in der gefalteten Form bleiben, was verhindert, dass sich die Restteile der Klebeseiten berühren oder einander ankleben, wenn die nachfolgende Schlauchfolie (6) von einem Benutzer unter dem Anfangsabschnitt in einer vertikal aufrechten Weise gehalten wird, wobei die Halteelemente (23) in einer ersten Position ausgestaltet sind, die gefalteten Folienteile getrennt voneinander zu halten;
wobei die Steuereinheit (12) weiterhin ausgestaltet ist, die Antriebseinheit zu steuern, um den Endabschnitt der aktuellen Schlauchfolie (4) zwischen die gefalteten Folienteile zu bewegen, die von den Halteelementen (23) in der ersten Position gehalten werden, und um die Halteelemente (23) zu steuern, sich von der ersten Position in eine zweite Position zu bewegen, wodurch für jedes Folienteil (62, 63) der Restteil der Klebeseite des Klebebands (120), das an dem Folienteil (62, 63) angebracht ist, gegen eine Außenseite des Endabschnitts der aktuellen Schlauchfolie (4) gedrückt wird, wodurch eine gespleißte Schlauchfolie ausgebildet wird;
**dadurch gekennzeichnet, dass** die Falteinheit (100) ausgestaltet ist, einem Benutzer das Falten der Folienteile (62, 63) zu ermöglichen, sodass eine Faltlinie in jedem Folienteil (62, 63) ausgebildet wird;
wobei die Folienfalteinheit (100) mit einem Paar von gegenüberliegend angeordneten Faltträgern (110) vorgesehen ist, zwischen denen der Anfangsabschnitt der geschnittenen nachfolgenden Schlauchfolie (6) angeordnet werden kann, wobei eine jede von den Faltträgern (110) eine jeweilige Faltkante (112) definiert und eine jede mit einem Bandaufnahmeteil vorgesehen ist, in oder an dem das Klebeband (120) angeordnet werden kann, wobei wenn der Benutzer die Folienteile (62, 63) des Anfangsabschnitts faltet, der zwischen den Faltträgern (110) über die jeweiligen Faltkanten (112) angeordnet wurde, die Faltlinien ausgebildet werden und die Außenseiten der Folienteile (62, 63) an den jeweiligen Klebebändern (120) angebracht werden, wobei die Klebebänder (120) in oder an den jeweiligen Bandaufnahmeteilen der Faltträger (110) angeordnet werden.

2. System (1) nach einem der vorhergehenden Ansprüche, wobei die Steuereinheit (12) weiterhin ausgestaltet ist, die Folienführungseinheit (7) und/oder die Rolleneinheit (2) zu steuern, um die Folienführungseinheit (7) und die Rolle entsprechend der nachfolgenden Schlauchfolie (6) nach dem Durchschneiden der aktuellen Schlauchfolie (4) und vor dem Bewegen des Endabschnitts der aktuellen Schlauchfolie (4) zwischen den gefalteten Folienteilen auszurichten.

3. System (1) nach einem der vorhergehenden Ansprüche, wobei jeder Faltträger (110) eine erste Tragefläche (111) aufweist, wobei die Faltkante (112) an einer Kante der ersten Tragefläche (111) ausgebildet ist und wobei das Bandaufnahmeteil (113) durch oder in der ersten Tragefläche (111) ausgebildet ist und/oder wobei ein jedes Halteelement (23) eine zweite Tragefläche aufweist;
wobei eine jede erste Tragefläche (111) und/oder jede zweite Tragefläche vorzugsweise einen normalen Vektor hat, der von dem Faltträger (110) und/oder dem Halteelement (23) jeweils weg und senkrecht zu dieser Fläche verläuft, wobei die normalen Vektoren der ersten Trageflächen (111) und/oder die normalen Vektoren der zweiten Trageflächen in eine Richtung parallel zu oder weg voneinander zeigen, wobei ein Winkel zwischen den normalen Vektoren der ersten Trageflächen (111) und/oder ein Winkel zwischen den normalen Vektoren der zweiten Trageflächen vorzugsweise in einem Bereich von 0 bis 150° liegt, und bevorzugter in einem Bereich von 60 bis 120°, wobei die normalen Vektoren der ersten Trageflächen (111) und/oder die normalen Vektoren der zweite Trageflächen vorzugsweise symmetrisch bezüglich der vertikalen Achse angeordnet sind.

4. System (1) nach einem der vorhergehenden Ansprüche, wobei ein jedes Halteelement (23) schwenkbar um eine Schwenkachse angeordnet ist, die vorzugsweise parallel zu einer horizontalen Achse ist und/oder wobei die Rolleneinheit (2) ein eigenständiges Paar von Halteelementen (23) für jede Rolle aufweist.

5. System (1) nach einem der Ansprüche 1 bis 3, wobei das Paar der Halteelemente (23) beweglich befestigt ist, um die Ausrichtung des Paars mit einer jeden von den in der Rolleneinheit befestigten Rollen zu ermöglichen.

6. System (1) nach einem der vorhergehenden Ansprüche, wobei die Rolleneinheit (2) und die Folienführungseinheit (7) beweglich zueinander angeordnet sind, um der Folienführungseinheit (7) zu ermöglichen, unabhängig von der Rolle, die der aktuellen Schlauchfolie (4) entspricht, und der Rolle, die der nachfolgenden Schlauchfolie (6) entspricht, ausgerichtet zu werden.

7. System (1) nach einem der vorhergehenden Ansprüche, wobei die Rolleneinheit (2) und das Folienverarbeitungssystem (10) beweglich zueinander angeordnet sind, um dem Folienverarbeitungssystem (10) zu ermöglichen, unabhängig von der Rolle, die der aktuellen Schlauchfolie (4) entspricht, und der Rolle, die der nachfolgenden Schlauchfolie (6) entspricht, ausgerichtet zu werden.

8. System (1) nach einem der vorhergehenden Ansprüche, wobei die Faltträgerplatten (23) beweglich zueinander sind, sodass ein Raum zwischen ihnen in einer Größe variiert werden kann, um das Entfernen der gefalteten Folienteile des Anfangsabschnitts zur vereinfachen, ohne ein Aneinanderkleben der Klebeseiten der Restteile zu verursachen.

9. System (1) nach einem der vorhergehenden Ansprüche, wobei das System einen ersten Sensor zum Erfassen eines Endes der aktuellen Schlauchfolie (4) aufweist, und wobei die Folienführungseinheit (7) eine weitere Schneideeinheit aufweist, wobei die Steuereinheit (12) weiterhin ausgestaltet ist, um die weitere Schneideeinheit zu steuern, um die aktuelle Schlauchfolie (4) in Reaktion auf das Erfassen des Endes der aktuellen Schlauchfolie (4) durchzuschneiden, wodurch der Endabschnitt vorgelagert von dem Schnitt ausgebildet wird, wobei die aktuelle (4) und die nachfolgende (6) Schlauchfolie jeweils vorzugsweise eine Vielzahl von im Wesentlichen darauf in regelmäßigen Abständen gedruckten identischen Bildern aufweisen, wobei das System (1) einen zweiten Sensor zum Erfassen eines auf die aktuelle Schlauchfolie (4) gedruckten Bilds aus der Vielzahl von Bildern aufweist, wobei die Steuereinheit (12) ausgestaltet ist, die weitere Schneideeinheit zu steuern, um die aktuelle Schlauchfolie (4) in einem bestimmten Abstand von dem zuletzt erfassten Bild durchzuschneiden, nachdem das Ende der ersten Schlauchfolie erfasst wurde, wobei die Schneideeinheit vorzugsweise ausgestaltet ist, dem Bediener das Schneiden der nachfolgenden Schlauchfolie (6) an einem vorbestimmten Abstand von einem Ende des Anfangsabschnitts der nachfolgenden Schlauchfolie (6) zu ermöglichen, was ermöglicht, dass der Abstand zwischen dem letzten gedruckten Bild auf dem aktuellen Schlauchabschnitt und dem ersten gedruckten Bild auf dem nachfolgenden Schlauchabschnitt im Wesentlichen gleich dem regelmäßigen Abstand ist.

10. Verfahren zum Spleißen eines Endabschnitts einer aktuellen Schlauchfolie (4), um einen Anfangsabschnitt einer nachfolgenden Schlauchfolie (6) zu beginnen, das aufweist:
a) Schneiden eines Anfangsabschnitts der nachfolgenden Schlauchfolie (6), wodurch der Anfangsabschnitt in ein Paar von gegenüberliegenden Folienteilen (62, 63) unterteilt wird;
b) Anordnen des Anfangsabschnitts, der das Paar von gegenüberliegenden Folienteilen (62, 63) zwischen einem Paar von gegenüberliegend angeordneten Faltträgern (110) aufweist, wobei jeder Faltträger (110) eine jeweilige Faltkante (112) definiert und eine jede mit einem Bandaufnahmeteil vorgesehen ist, in oder an dem ein jeweiliges Klebeband (120) angeordnet ist;
c) Falten der Folienteile des Anfangsabschnitts über den jeweiligen Faltkanten, wodurch eine Außenseite der Folienteile (62, 63) an einem Teil an einer Klebeseite des jeweiligen Klebebands (120) angebracht wird, wobei ein Restteil der Klebeseite freigelassen wird, wobei das Falten so durchgeführt wird, dass die Folienteile (62, 63) in der gefalteten Form bleiben, was verhindert, dass die Restteile der Klebeseiten aneinander ankleben, wenn zumindest die nachfolgende Folie (6) von einem Benutzer unterhalb des Anfangsabschnitts in einer vertikal aufrechten Weise gehalten wird;
d) Halten der gefalteten Folienteile, die voneinander getrennt sind;
e) Einbringen des Endabschnitts der aktuellen Schlauchfolie (4) zwischen den gehaltenen gefalteten Folienteilen (62, 63);
f) Drücken für jedes Folienteil (62, 63) des Restteils der Klebeseite des Klebebands (120), das am Folienteil angebracht ist, gegen eine Außenseite des Endabschnitts der aktuellen Schlauchfolie (4), um den Endabschnitt der aktuellen Schlauchfolie an dem Anfangsabschnitt der nachfolgenden Schlauchfolie (6) zu verspleißen, wodurch eine gespleißte Schlauchfolie ausgebildet wird.

11. Verfahren nach Anspruch 10, wobei Schritt c) das Falten der Folienteile (62, 63) des Anfangsabschnitts über die jeweiligen Faltkanten (112) aufweist, wodurch eine Faltlinie in einem jeden der Folienteile (62, 63) ausgebildet wird, wobei Schritt d) vorzugsweise durchgeführt wird unter Verwendung eines Paares von beweglichen Halteelementen (23), die in einer ersten Position angeordnet sind, wobei Schritt f) vorzugsweise durchgeführt wird, indem die Halteelemente (23) an eine zweite Position bewegt werden; und/oder
wobei Schritt e) durchgeführt wird, indem eine Antriebsrichtung der aktuellen Schlauchfolie (4) umgekehrt wird;
wobei das Bewegen der Halteelemente (23) an eine zweite Position vorzugsweise das Schwenken um eine Schwenkachse aufweist, die vorzugsweise parallel zu einer horizontalen Achse ist.

12. Verfahren nach einem der Ansprüche 10 bis 11, wobei jeder Faltträger (110) eine erste Tragefläche (111) aufweist, wobei die Faltkante (112) an einer Kante der ersten Tragefläche (111) ausgebildet ist und wobei das Bandaufnahmeteil (113) durch oder in der ersten Tragefläche (111) ausgebildet ist und/oder wobei ein jedes Halteelement (23) eine zweite Tragefläche aufweist;
wobei eine jede erste Tragefläche (111) und/oder eine jede zweite Tragefläche einen normalen Vektor hat, der von dem Faltträger (110) und/oder dem Halteelement (23) jeweils weg und senkrecht zu dieser Fläche verläuft, wobei die normalen Vektoren der ersten Trageflächen (111) und/oder die normalen Vektoren der zweiten Trageflächen in einer Richtung parallel zu oder weg voneinander zeigen,
wobei ein Winkel zwischen den normalen Vektoren der ersten Trageflächen (111) und/oder ein Winkel zwischen den normalen Vektoren der zweiten Trageflächen vorzugsweise im Bereich von 0 bis 150° liegt, und bevorzugter in einem Bereich von 60 bis 120°, wobei die normalen Vektoren der ersten Trageflächen (111) und/oder die normalen Vektoren der zweiten Trageflächen vorzugsweise symmetrisch bezüglich einer vertikalen Achse angeordnet sind.

13. Verfahren nach einem der Ansprüche 10 bis 12, das weiterhin aufweist:
Erfassen eines Endes der aktuellen Schlauchfolie (4);
Durchschneiden der aktuellen Schlauchfolie (4) in Reaktion auf das Erfassen des Endes der ersten Schlauchfolie, wodurch der Endabschnitt vorgelagert vom Schnitt ausgebildet wird;
wobei die aktuelle (4) und die nachfolgende (6) Schlauchfolie jeweils eine Vielzahl von im Wesentlichen darauf in regelmäßigen Abständen gedruckten identischen Bildern aufweist, wobei das Verfahren weiterhin aufweist:
Erfassen eines auf die aktuelle Schlauchfolie (4) gedruckten Bilds aus einer Vielzahl von Bildern;
Durchschneiden der aktuellen Schlauchfolie (4) an einem bestimmten Abstand von dem letzten erfassten Bild, nachdem das Ende der ersten Schlauchfolie erfasst wurde;
wobei das Verfahren vorzugsweise weiterhin aufweist:
Schneiden der nachfolgenden Schlauchfolie (6) an einem bestimmten Abstand von einem Ende des Anfangsabschnitts der nachfolgenden Schlauchfolie (6), was ermöglicht, dass der Abstand zwischen dem letzten gedruckten Bild auf dem aktuellen Schlauchabschnitt und dem ersten gedruckten Bild auf dem nachfolgenden Schlauchabschnitt (6) im Wesentlichen gleich dem regelmäßigen Abstand ist.

14. Verfahren nach einem der Ansprüche 10 bis 13, das weiterhin aufweist: Vorsehen einer Rolle, die die aktuelle Schlauchfolie (4) hält, und einer Rolle, die die nachfolgende Folie (6) hält;
vorzugsweise Ausrichten der Folienführungseinheit (7) an der Rolle, die der nachfolgenden Schlauchfolie (7) entspricht, nach dem Durchschneiden der aktuellen Schlauchfolie (4) und vor dem Anordnen des Endabschnitts der aktuellen Schlauchfolie (4) zwischen den gefalteten Folienteilen der nachfolgenden Schlauchfolie (6).

## Revendications

1. Système (1) d'épissage d'une section de fin d'un film tubulaire courant (4) à une section de début d'un film tubulaire ultérieur (6), comprenant :
une unité de bobine (2) comprenant une bobine (3) correspondant au film tubulaire courant, une bobine correspondant au film tubulaire ultérieur ;
une unité de guidage de film (7) comprenant une unité d'entraînement pour entraîner un film, de l'unité de bobine (2) en amont à un système de traitement de film, ou en aval en retour à l'unité de bobine (2), dans lequel, avant ledit épissage, l'unité de guidage de film (7) est configurée pour entraîner le film tubulaire courant (4) ;
un dispositif de commande (12) pour commander l'unité d'entraînement ;
un système de préparation de film (10) comprenant une unité de coupe (130) pour couper une section de début du film tubulaire ultérieur (6), divisant ainsi la section de début en une paire de parties de film (62, 63) opposées ;
dans lequel l'unité de bobine (2) comprend en outre une paire d'organes de maintien (23) mobiles agencés de manière opposée, et dans lequel le système de préparation de film (10) comprend en outre une unité de pliage (100) de film configurée pour permettre à un utilisateur de plier des parties de film (62, 63) de sorte qu'un côté extérieur des parties de film soit attaché à une partie d'un côté adhésif d'un ruban adhésif (120) respectif, dans lequel pour chaque partie de film (62, 63), une partie restante du côté adhésif du ruban adhésif (120) qui est attachée à cette partie de film (62, 63) est laissée libre, dans lequel l'unité de pliage (100) de film est configurée pour permettre aux parties de film (62, 63) d'être pliées de sorte que les parties de film (62, 63) restent dans leur forme pliée, empêchant les parties restantes des côtés adhésifs de se toucher ou d'adhérer l'une à l'autre, au moins lorsque le film tubulaire ultérieur (6) est maintenu par un utilisateur en dessous de la section de début de manière droite verticalement, dans lequel les organes de maintien (23) sont configurés, dans une première position, pour maintenir les parties pliées de film séparées l'une de l'autre ;
dans lequel le dispositif de commande (12) est en outre configuré pour commander l'unité d'entraînement pour déplacer la section de fin du film tubulaire courant (4) entre les parties pliées de film maintenues par les organes de maintien (23) dans la première position, et pour commander les organes de maintien (23) pour se déplacer de la première position à une deuxième position, pressant ainsi, pour chaque partie de film (62, 63), la partie restante du côté adhésif du ruban adhésif (120) attachée à cette partie de film (62, 63) contre un côté extérieur de la section de fin du film tubulaire courant (4) formant ainsi un film tubulaire épissé ;
**caractérisé en ce que** l'unité de pliage (100) est configurée pour permettre à un utilisateur de plier les parties de film (62, 63) de sorte qu'une ligne de pliage soit formée dans chaque partie de film (62, 63) ;
dans lequel l'unité de pliage (100) de film est pourvue d'une paire de supports de pliage (110) agencés de manière opposée, entre lesquels la section de début du film tubulaire ultérieur (6) qui a été coupée peut être agencée, dans lequel les supports de pliage (110) définissent chacun un bord de pliage (112) respectif et sont chacun pourvu d'une partie de réception de ruban, dans ou sur laquelle le ruban adhésif (120) peut être agencé,
dans lequel, lorsque l'utilisateur plie les parties de film (62, 63) de la section de début qui a été agencée entre les supports de pliage (110) sur les bords de pliage (112) respectifs, lesdites lignes de pliage sont formées et lesdits côtés extérieurs des parties de film (62, 63) sont attachés aux rubans adhésifs (120) respectifs, dans lequel les rubans adhésifs (120) sont agencés dans ou sur les parties de réception de ruban respectives des supports de pliage (110).

2. Système (1) selon la revendication précédente, dans lequel le dispositif de commande (12) est en outre configuré pour commander l'unité de guidage de film (7) et/ou l'unité de bobine (2) pour aligner l'unité de guidage de film (7) et la bobine correspondant au film tubulaire ultérieur (6) après la découpe du film tubulaire courant (4) et avant ledit déplacement de la section de fin du film tubulaire courant (4) entre les parties pliées de film.

3. Système (1) selon l'une quelconque des revendications précédentes, dans lequel chaque support de pliage (110) comprend une première surface de support (111), dans lequel le bord de pliage (112) est formé sur un bord de ladite première surface de support (111) et dans lequel la partie de réception de ruban (113) est formée par ou dans la première surface de support (111), et/ou dans lequel chaque organe de maintien (23) comprend une deuxième surface de support ;
dans lequel chaque première surface de support (111) et/ou chaque deuxième surface de support a de préférence un vecteur normal s'éloignant du support de pliage (110) et/ou de l'organe de maintien (23), respectivement, et perpendiculaire à cette surface, dans lequel les vecteurs normaux des premières surfaces de support (111) et/ou les vecteurs normaux des deuxièmes surfaces de support pointent vers des directions parallèles les unes aux autres ou éloignées les unes des autres, dans lequel un angle entre les vecteurs normaux des premières surfaces de support (111) et/ou un angle entre les vecteurs normaux des deuxièmes surfaces de support se situe de préférence dans une plage de 0 à 150 degrés, et de manière davantage préférée dans une plage de 60 à 120 degrés, dans lequel les vecteurs normaux des premières surfaces de support (111) et/ou les vecteurs normaux des deuxièmes surfaces de support sont agencés de préférence symétriquement par rapport à un axe vertical.

4. Système (1) selon l'une quelconque des revendications précédentes, dans lequel chaque organe de maintien (23) est agencé de manière pivotante autour d'un axe de pivot qui est de préférence parallèle à un axe horizontal et/ou dans lequel l'unité de bobine (2) comprend une paire séparée desdits organes de maintien (23) pour chaque bobine.

5. Système (1) selon l'une quelconque des revendications 1 à 3, dans lequel la paire d'organes de maintien (23) est montée de manière mobile pour permettre l'alignement de ladite paire avec chacune des bobines montées dans l'unité de bobine (2).

6. Système (1) selon l'une quelconque des revendications précédentes, dans lequel l'unité de bobine (2) et l'unité de guidage de film (7) sont agencées de manière mobile l'une par rapport à l'autre pour permettre à l'unité de guidage de film (7) d'être alignée avec la bobine correspondant au film tubulaire courant (4) et la bobine correspondant au film tubulaire ultérieur (6), séparément.

7. Système (1) selon l'une quelconque des revendications précédentes, dans lequel l'unité de bobine (2) et le système de préparation de film (10) sont agencés de manière mobile l'un par rapport à l'autre pour permettre au système de préparation de film (10) d'être aligné avec la bobine correspondant au film tubulaire courant (4) et la bobine correspondant au film tubulaire ultérieur (6), séparément.

8. Système (1) selon l'une quelconque des revendications précédentes, dans lequel les supports de pliage (23) sont mobiles l'un par rapport à l'autre de sorte qu'un espace entre eux puisse varier en taille pour faciliter le retrait de parties de film pliées de la section de début sans amener les parties restantes des côtés adhésifs à adhérer l'une à l'autre.

9. Système (1) selon l'une quelconque des revendications précédentes, dans lequel le système comprend un premier capteur pour détecter une fin du film tubulaire courant (4), et dans lequel l'unité de guidage de film (7) comprend une unité de coupe supplémentaire, ledit dispositif de commande (12) étant en outre configuré pour commander l'unité de coupe supplémentaire pour découper le film tubulaire courant (4) en réponse à la détection de la fin du film tubulaire courant (4), formant ainsi la section de fin en amont de la coupe, dans lequel les films tubulaires courant (4) et ultérieur (6) comprennent de préférence chacun une pluralité d'images sensiblement identiques imprimées dessus à un intervalle régulier, dans lequel le système (1) comprend un deuxième capteur pour détecter une image imprimée sur le film tubulaire courant (4) parmi ladite pluralité d'images, dans lequel le dispositif de commande (12) est configuré pour commander l'unité de coupe supplémentaire pour découper le film tubulaire courant (4) à une distance prédéfinie de la dernière image détectée après avoir détecté la fin du premier film tubulaire, dans lequel l'unité de coupe est de préférence configurée pour permettre à l'opérateur de couper le film tubulaire ultérieur (6) à une distance prédéfinie d'une extrémité de la section de début du film tubulaire ultérieur (6), permettant à l'intervalle entre la dernière image imprimée sur la section tubulaire courante et la première image imprimée sur la section tubulaire ultérieure d'être sensiblement égal audit intervalle régulier.

10. Procédé d'épissage d'une section de fin d'un film tubulaire courant (4) à une section de début d'un film tubulaire ultérieur (6), comprenant :
a) la coupe d'une section de début du film tubulaire ultérieur (6), divisant ainsi la section de début en une paire de parties de film (62, 63) opposées ;
b) l'agencement de la section de début ayant la paire de parties de film (62, 63) opposées entre une paire de supports de pliage (110) agencés de manière opposée, dans lequel les supports de pliage (110) définissent chacun un bord de pliage (112) respectif et sont pourvus chacun d'une partie de réception de ruban dans ou sur laquelle un ruban adhésif (120) respectif est agencé ;
c) le pliage des parties de film de la section de début sur les bords de pliage respectifs attachant ainsi un côté extérieur des parties de film (62, 63) à une partie d'un côté adhésif du ruban adhésif (120) respectif, dans lequel une partie restante dudit côté adhésif est laissée libre, ledit pliage étant réalisé de sorte que les parties de film (62, 63) restent dans leur forme pliée, empêchant les parties restantes des côtés adhésifs d'adhérer l'une à l'autre, au moins lorsque le film ultérieur (6) est maintenu par un utilisateur en dessous de la section de début de manière droite verticalement ;
d) le maintien des parties pliées de film séparées l'une de l'autre ;
e) le placement de la section de fin du film tubulaire courant (4) entre les parties de film (62, 63) pliées maintenues ;
f) la pression, pour chaque partie de film (62, 63), de la partie restante du côté adhésif du ruban adhésif (120) attachée à cette partie de film contre un côté extérieur de la section de fin du film tubulaire courant (4) pour épisser la section de fin du film tubulaire courant à la section de début du film tubulaire ultérieur (6), formant ainsi un film tubulaire épissé.

11. Procédé selon la revendication 10, dans lequel l'étape c) comprend le pliage des parties de film (62, 63) de la section de début sur les bords de pliage (112) respectifs, formant ainsi une ligne de pliage dans chaque des parties de film (62, 63), dans lequel l'étape d) est de préférence réalisée en utilisant une paire d'organes de maintien (23) mobiles qui sont agencés dans une première position, dans lequel l'étape f) est de préférence réalisée en déplaçant les organes de maintien (23) à une deuxième position ; et/ou
dans lequel l'étape e) est réalisée en inversant une direction d'entraînement du film tubulaire courant (4) ;
dans lequel ledit déplacement des organes de maintien (23) vers une deuxième position comprend de préférence un pivotement autour d'un axe de pivotement qui est de préférence parallèle à un axe horizontal.

12. Procédé selon l'une quelconque des revendications 10 et 11, dans lequel chaque support de pliage (110) comprend une première surface de support (111), dans lequel le bord de pliage (112) est formé sur un bord de ladite première surface de support (111) et dans lequel la partie de réception de ruban est formée par ou dans la première surface de support (111), et dans lequel chaque organe de maintien (23) comprend une deuxième surface de support ;
dans lequel chaque première surface de support (111) et/ou chaque deuxième surface de support a un vecteur normal s'éloignant du support de pliage (110) et/ou de l'organe de maintien (23), respectivement, et perpendiculaire à cette surface, dans lequel les vecteurs normaux des premières surfaces de support (111) et/ou les vecteurs normaux des deuxièmes surfaces de support pointent dans des directions parallèles les unes aux autres ou éloignées les unes des autres ;
dans lequel un angle entre les vecteurs normaux des premières surfaces de support (111) et/ou un angle entre les vecteurs normaux des deuxièmes surfaces de support se situe de préférence dans une plage de 0 à 150 degrés, et de manière davantage préférée dans une plage de 60 à 120 degrés, dans lequel les vecteurs normaux des premières surfaces de support (111) et/ou les vecteurs normaux des deuxièmes surfaces de support sont agencés de préférence symétriquement par rapport à un axe vertical.

13. Procédé selon l'une quelconque des revendications 10 à 12, comprenant en outre :
la détection d'une extrémité du film tubulaire courant (4) ;
la découpe du film tubulaire courant (4) en réponse à la détection de la fin du premier film tubulaire, formant ainsi la section de fin en amont de la coupe ;
dans lequel les films tubulaires courant (4) et ultérieur (6) comprennent de préférence chacun une pluralité d'images sensiblement identiques imprimées dessus à un intervalle régulier, le procédé comprenant en outre :
la détection d'une image imprimée sur le film tubulaire courant (4) parmi ladite pluralité d'images ;
la découpe du film tubulaire courant (4) à une distance prédéfinie de la dernière image détectée après avoir détecté la fin du premier film tubulaire ;
le procédé comprenant en outre de préférence :
la coupe du film tubulaire ultérieur (6) à une distance prédéfinie d'une extrémité de la section de début du film tubulaire ultérieur (6), permettant à l'intervalle entre la dernière image imprimée sur la section tubulaire courante et la première image imprimée sur la section tubulaire ultérieure (6) d'être sensiblement égal audit intervalle régulier.

14. Procédé selon l'une quelconque des revendications 10 à 13, comprenant en outre :
la fourniture d'une bobine maintenant le film tubulaire courant (4) et d'une bobine maintenant le film ultérieur (6) ;
de préférence, l'alignement de l'unité de guidage de film (7) à la bobine qui correspond au film tubulaire ultérieur (7) après la découpe du film tubulaire courant (4) et avant de placer ladite section de fin du film tubulaire courant (4) entre les parties pliées de film du film tubulaire ultérieur (6).
